Europäisches Patentamt

European Patent Office

Office européen des brevets

(11) Publication number: **0 222 565 B1**

## EUROPEAN PATENT SPECIFICATION

(45) Date of publication of patent specification: **03.06.92**  (51) Int. Cl.5: **G11B 7/08**

(21) Application number: **86308513.0**

(22) Date of filing: **31.10.86**

(54) **Apparatus for urging a rotatable member to a neutral circumferential position.**

(30) Priority: **05.11.85 JP 247723/85**

(43) Date of publication of application:
**20.05.87 Bulletin 87/21**

(45) Publication of the grant of the patent:
**03.06.92 Bulletin 92/23**

(84) Designated Contracting States:
**DE FR GB NL**

(56) References cited:
**JP-A-60 140 549**

**PATENT ABSTRACTS OF JAPAN, vol. 9, no. 312 (P-411)[2035], 7th December 1985; & JP - A - 60 140 549**

**PATENT ABSTRACTS OF JAPAN, vol. 8, no. 42 (P-265)[1479], 23rd February 1984; & JP - A 58 194 145**

**PATENT ABSTRACTS OF JAPAN, vol. 9, no. 109 (P-355)[1832], 14th May 1985; & JP - A - 59 231 744**

(73) Proprietor: **SEIKO INSTRUMENTS INC.**
**31-1, Kameido 6-chome Koto-ku**
**Tokyo 136(JP)**

(72) Inventor: **Nakajima, Atsunobu c/o Seiko Instruments &**
**Electronics Ltd. 31-1, Kameido 6-chome Koto-ku Tokyo(JP)**
Inventor: **Hoshi, Seiji c/o Seiko Instruments & Electronics Ltd. 31-1, Kameido 6-chome Koto-ku Tokyo(JP)**
Inventor: **Yamamoto, Hiroyoshi c/o Seiko Instruments &**
**Electronics Ltd. 31-1, Kameido 6-chome Koto-ku Tokyo(JP)**
Inventor: **Miyata, Chikara c/o Seiko Instruments &**
**Electronics Ltd. 31-1, Kameido 6-chome Koto-ku Tokyo(JP)**
Inventor: **Nanno, Ikuo c/o Seiko Instruments & Electronics Ltd. 31-1, Kameido 6-chome Koto-ku Tokyo(JP)**
Inventor: **Inagaki, Shigeru c/o Seiko Instruments &**
**Electronics Ltd. 31-1, Kameido 6-chome Koto-ku Tokyo(JP)**
Inventor: **Hoshi, Hideo c/o Seiko Instruments &**
**Electronics Ltd. 31-1, Kameido 6-chome Koto-ku Tokyo(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

(74) Representative: **Miller, Joseph et al**
**J. MILLER & CO. Lincoln House 296-302 High**
**Holborn**
**London WC1V 7JH(GB)**

## Description

This invention relates to apparatus for urging a rotatable member to a neutral circumferential position and, although the invention is not so restricted, it relates more particularly to such apparatus when used in an optical pickup so as to retain the neutral point of tracking in equipment in which focusing and tracking are performed by sliding a lens in the axial direction and by rotating it about a shaft, respectively.

An actuator is known in which focusing and tracking of a lens are conducted by sliding the lens in the axial direction and by rotating it around a shaft, respectively. In such a known actuator, it is common to use a rubber spring to retain the lens at the neutral point of tracking.

This conventional method of retention by a rubber spring, however, requires the provision of space for the rubber spring, and is therefore very inconvenient from the viewpoint of the desirability of reducing the size of the equipment.

Moreover, if the rubber spring is inaccurately mounted in such a way that it is distorted, non-linearity may be generated in the spring action, or the neutral position of the lens may be deflected from the outset.

In addition, the rubber spring does not have good temperature characteristics owing to the physical properties of its material, and it deteriorates as its resonance frequency or sensitivity changes.

In JP-A-60-140549 there is disclosed apparatus for urging a rotatable member to a neutral circumferential position comprising a rotatable member which is rotatable about and movable axially of a shaft, the rotatable member having at least one portion thereof which is disposed within at least one part-annular magnetic gap between two magnetic or magnetically permeable members, the rotatable member being provided with magnetically permeable material for urging the rotatable member towards the neutral circumferential position.

According to the present invention, there is therefore provided apparatus for urging a rotatable member to a neutral circumferential position comprising a rotatable member which is rotatable about and movable axially of a shaft, the rotatable member having at least one portion thereof which is disposed within at least one part-annular magnetic gap between two magnetic or magnetically permeable members, the rotatable member being provided with magnetically permeable material for urging the rotatable member towards the neutral circumferential position, whereby the rotatable member, when moved away from the neutral circumferential position, is urged back towards the latter by the magnetic restoring force acting on the pieces of magnetically permeable material, characterised in that the magnetically permeable material comprises a number of pieces thereof each of which, when the rotatable member is in the neutral circumferential position, is disposed adjacent a respective circumferential end of said gap at which the magnetic flux density in said gap changes in the circumferential direction but does not change substantially in the axial direction, so that when the rotatable member is moved in the axial direction, there is substantially no magnetic restoring force acting on the pieces of magnetically permeable material.

Preferably the rotatable member has diametrically oppositely disposed portions each of which is disposed in a respective gap, each said portion carrying two spaced apart pieces of magnetically permeable material which, when the rotatable member is in the neutral circumferential position, are respectively disposed adjacent opposite circumferential ends of the respective gap.

The two magnetically permeable members may comprise portions of magnetic yokes which are in contact with a permanent magnet disposed therebetween.

The rotatable member preferably carries an objective lens which is radially spaced from the shaft, the rotatable member being provided with focusing means for moving the rotatable member axially so as to effect focusing of the objective lens, and the rotatable member being provided with tracking means for moving the rotatable member circumferentially so as to effect tracking of the objective lens.

Each of the focusing means and the tracking means is preferably constituted by a coil.

Thus the apparatus of the present invention requires no space for a spring to be used for tracking, is easily manufactured, exhibits excellent temperature characteristics, and has almost no influence on the focusing direction, thereby overcoming the problems of the conventional apparatus.

The present invention is based on the principle that a piece of a magnetic material, when placed in a magnetic field in which the distribution of magnetic flux density varies, is subjected to a force which attracts it toward the area where the magnetic flux density is larger. At the vicinity of the ends of the magnetic gap, as viewed in the circumferential direction, the magnetic flux density gradually changes owing to leakage flux, and a spring force acting in the tracking direction is generated by the provision of the piece of magnetic material at that position.

Preferably, two or four pieces of magnetic material are attached to the peripheral portion of an objective lens retaining holder. These magnetic members are disposed at positions near the ends of two magnetic gaps as viewed in the circumferential direction, i.e. the tracking direction, where the magnetic flux density changes to some extent in the circumferential direction but by only a small amount in the axial direction. In consequence, when the objective lens retaining holder rotates in the tracking direction, a restoring force is generated. When the holder is slid in the axial direction (focusing direction), however, almost no force acts on it.

The invention is illustrated, merely by way of example, in the accompanying drawings, in which:-

Figure 1 is a perspective view of an apparatus according to the present invention;

Figure 2 is a perspective view of a known apparatus having a rubber spring;

Figure 3 is a graph illustrating the distribution in an embodiment of the present invention of magnetic flux density in a magnetic gap, as viewed in the circumferential direction;

Figure 4 is a graph illustrating the distribution in an embodiment of the present invention of magnetic flux density in a magnetic gap in the axial direction;

Figure 5 is a plan view of an embodiment of the present invention, showing the positions of the pieces of magnetic material; and

Figure 6 shows the results of measurement of the frequency characteristics of the tracking in the case of the embodiment of the present invention illustrated in Figures 1 and 5.

An embodiment of the present invention will be described hereinunder with reference to the accompanying drawings. As shown therein, an objective lens retaining holder 1 has a tubular portion 1a and a diametrically extending arm 1b which extends radially outwardly of the tubular portion 1a on diametrically opposite sides of the latter. The arm 1b is provided with an objective lens 2. The tubular portion 1a is provided with a focusing coil 3 for adjusting focusing, tracking coils 4 for adjusting tracking, and four pieces of magnetic material 11. The holder 1 can be rotated about a supporting shaft 7 and can be slid in the axial direction of the supporting shaft 7. As will be appreciated, the objective lens 2 is radially spaced from the shaft 7.

An inner yoke 5 of magnetically permeable material has an annular portion 5a on which are mounted two diametrically oppositely disposed blocks 5b which are respectively disposed within slots in the holder 1, the slots 1c being formed between the tubular portion 1a and the arm 1b. The blocks 5b are radially spaced from the tubular portion 1a.

An outer yoke 8 of magnetically permeable material has a plate 8a which is mounted beneath the holder 1 and the inner yoke 5. The outer yoke 8 is provided with two spaced apart blocks 8b each of which is disposed radially outwardly of and is spaced from the tubular portion 1a.

A permanent magnet 6 is co-axial with and has the same external diameter as the annular portion 5a the inner yoke 5. The magnet 6 is disposed between and in contact with the annular portion 5 and the plate 8a. A magnetic gap 12 of arcuate shape is provided between each of the blocks 5b and the corresponding block 8b.

The focusing coil 3, the tracking coils 4 and the four pieces of magnetic material 11 are disposed within the magnetic gaps 12.

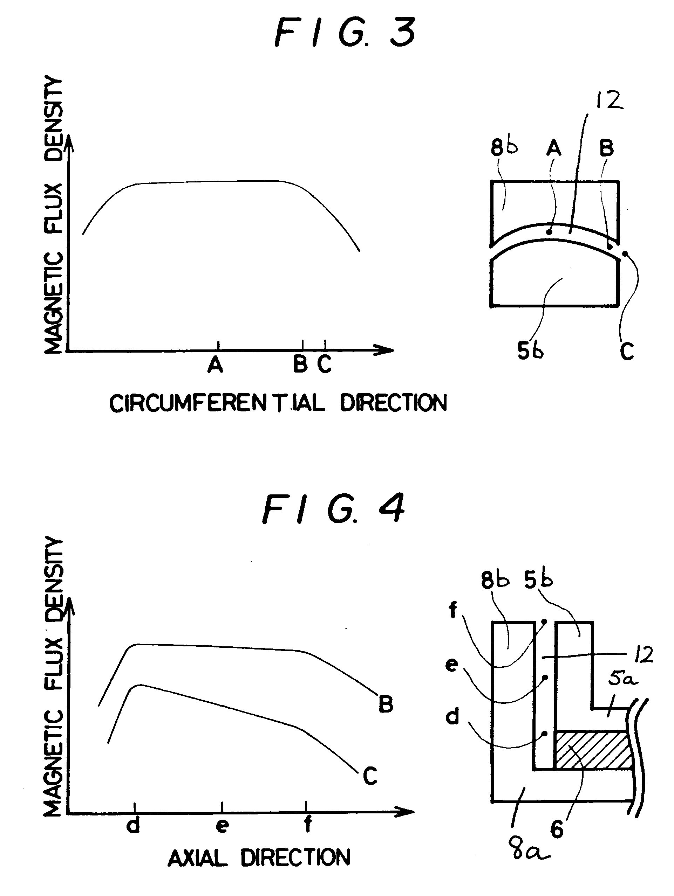

Figure 3 shows the distribution of magnetic flux density in a magnetic gap 12 in the circumferential direction thereof (the tracking direction). Thus, to be more precise, Figure 3 shows the distribution of the radial component of the magnetic flux density vector with the supporting shaft 7 as a centre. Other components can be disregarded, since they are so small. All distributions hereinafter referred to are distributions of radial components, unless otherwise stated.

As can be seen from Figure 3, the central portion of the magnetic gap 12 shows a uniform distribution of magnetic flux density. At points B and C near an end of the magnetic gap 12, however, the magnetic flux density gradually changes owing to leakage flux. In consequence, when a piece of magnetic material is placed near an end of the magnetic gap 12, a magnetic force acts on the magnetic material, pulling it into the magnetic gap 12 which has a larger magnetic flux density.

Similarly, Figure 4 shows the distribution of magnetic flux density in a magnetic gap 12 in the axial direction thereof (the focusing direction). The magnetic flux density in the axial direction is distributed in a different way at points B and C. Namely, at point B, which is closer to a point A, which is at the centre of the magnetic gap 12, the distribution of the magnetic flux density in the axial direction is relatively uniform between a point d, which represents the edge of the magnet 6 shown in Figure 4, and a point f which represents the edge of the magnetic gap 12. On the other hand, at point C, which is located circumferentially outwardly from point B, the magnetic flux density is smaller over the entire axial length, and changes greatly between points d and f. It is therefore clear that, if placed at point C, the magnetic material is affected by a magnetic force in the focusing direction as well as in the tracking direction.

From the foregoing description, it is clear that there is an optimum position at which a piece of magnetic material should be placed when forming a magnetic spring, the said position being such that a magnetic force acts on the piece of magnetic material in the tracking direction but does not apply a force thereto in the focusing direction. This is at point B of Figure 3 in the circumferential direction and at point e (near the mid-point between points d and f) of Figure 4 in the axial direction. In this case, point e indicates a mid-point obtained when the objective lens retaining holder 1 is raised to its operating point (bias point) through a focusing servo-mechanism (not shown). The optimum position for the piece of magnetic material may vary with the configuration or construction of the magnet 6 and yokes 5,8 employed. However, it can be obtained on the basis of the concept of this embodiment.

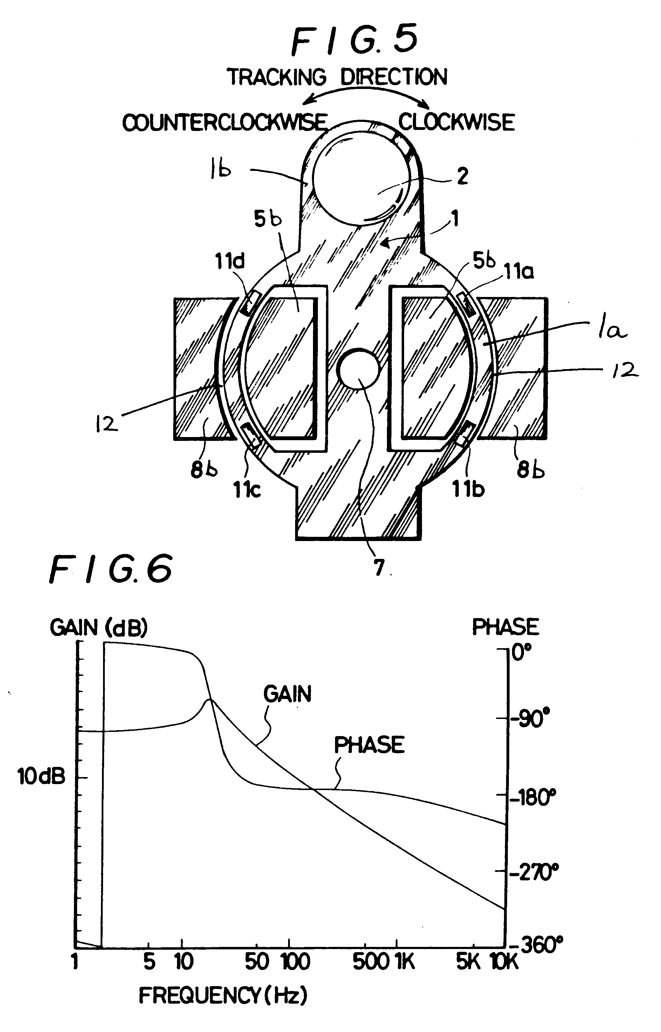

Figure 5 shows an actuator having four pieces (11a,11b,11c,11d) of magnetic material. When the objective lens retaining holder 1 moves in the clockwise direction which is a tracking direction, the pieces of magnetic material 11b and 11d are moved into magnetic fields where the magnetic flux density thereof gradually decreases, as shown in Figure 3, and are therefore subjected to a magnetic force which tends to pull them back into the magnetic gaps 12. In this case, the pieces of magnetic material 11a and 11c enter the magnetic fields formed in the magnetic gaps 12 which have uniform magnetic field distribution, and no force is applied thereto. When the objective lens retaining holder 1 moves in the counter-clockwise direction, on the other hand, a similar magnetic force acts on the pieces of magnetic material 11a and 11c, generating a force which tends to pull the objective lens retaining holder 1 back to its neutral position. A magnetic "spring" which tends to retain the objective lens at its neutral point is thus formed. Accordingly an ideal actuator in which substantially no spring force is generated in the focusing direction can be obtained.

The actuator of this embodiment employs four pieces of magnetic material. It is apparent, however, that the neutral position retaining magnetic spring can be formed by only the pieces of magnetic material 11a and 11d or by only the pieces of magnetic material 11b and 11c shown in Figure 5.

Figure 6 is a graph illustrating the frequency characteristics of the tracking. This graph shows that no secondary vibrations are generated and that excellent spring characteristics are available.

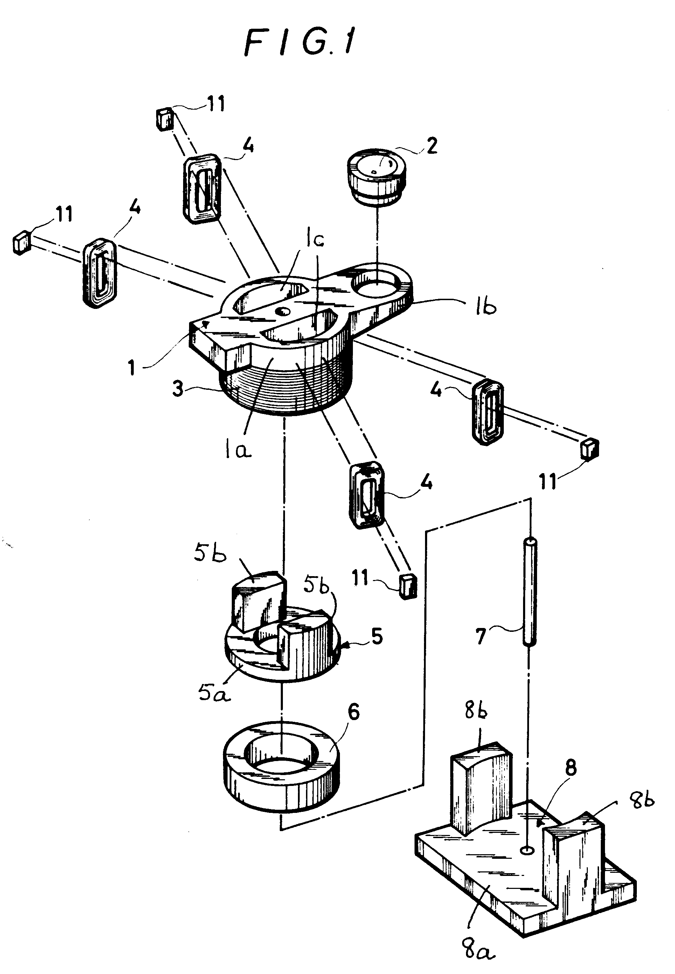

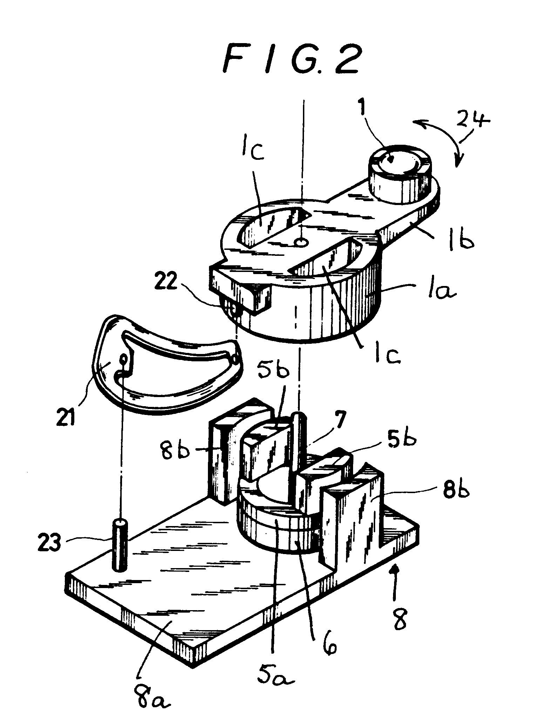

In contrast to the present invention, in an actuator in which focusing and tracking are conducted by sliding a lens in the axial direction and rotating it around a shaft, respectively, it is common to use a rubber spring to retain the neutral point of tracking. Figure 2 shows an example of such a conventional actuator, parts of Figure 2 which correspond to those of Figure 1 being given the same reference numerals. As shown in Figure 2, one end of a rubber spring 21 is fixed to a pin 23 which is set in a fixed portion of the actuator, such as the plate 8a of the yoke 8, and the other end of the rubber spring 21 is fixed through a pin 22 to the objective lens retaining holder 1 which constitutes a movable portion. When the objective lens moves in a tracking direction indicated by an arrow 24, its neutral point is retained by the resilient force of the rubber spring 21.

As indicated above, this conventional method of retention by a rubber spring 21, however, requires the provision of space for the rubber spring 21, and is therefore very inconvenient from the view point of the desirability of reducing the size of the optical pickup, which has been requested more and more in recent years.

If, moreover, the rubber spring 21 is inaccurately mounted in such a way that it is distorted, non-linearity may be generated in the spring action, or the neutral position of the objective lens may be deflected from the outset. This makes the process of mounting the rubber spring 21 very troublesome.

In addition, the rubber spring 21 does not have good temperature characteristics owing to the physical properties of its material, and is subjected to deterioration as its resonance frequency or sensitivity changes.

When, moreover, the objective lens retaining holder 1 of the prior art apparatus is raised to its operating point by passing a bias current through a focusing servo-mechanism (not shown), the rubber spring 21 generates a force which pulls it downwardly, thereby necessitating the use of a larger bias current. In this way, the rubber spring 21 affects the movement of the objective lens in the focusing direction.

As is clear from the foregoing description, however, a mechanism according to the present invention for retaining a neutral tracking position can be constructed by simply attaching pieces of magnetic material to the objective lens retaining holder 1. In consequence, the space necessary for the rubber spring used in the conventional actuator can be eliminated, thereby contributing to a reduction in the size of the actuator

As stated above, when the retention is performed by a rubber spring, since it is difficult to mount the latter accurately without distorting the rubber, non-linearity may be generated in the spring action and the neutral position may be deflected from the outset. However, it is relatively easy to attach pieces of magnetic material 11 to the objective lens retaining holder 1 with accuracy, almost eliminating such problems.

Since the device of the present invention utilises a magnetic action, it has excellent temperature characteristics compared with the conventional rubber spring.

In addition, the device of the present invention does not substantially affect the focusing operation, and therefore requires a smaller bias current than the one necessary for a rubber spring, thereby making the power consumption lower.

## Claims

1. Apparatus for urging a rotatable member (1) to a neutral circumferential position comprising a rotatable member (1) which is rotatable about and movable axially of a shaft (7), the rotatable member (1) having at least one portion (1a) thereof which is disposed within at least one part-annular magnetic gap (12) between two magnetic or magnetically permeable members (5b,5b), the rotatable member (1) being provided with magnetically permeable material (11a,11b,11c,11d) for urging the rotatable member (1) towards the neutral circumferential position, whereby the rotatable member, when moved away from the neutral circumferential position, is urged back towards the latter by the magnetic restoring force acting on the pieces of magnetically permeable material (11a,11b,11c,11d), characterised in that the magnetically permeable material comprises a number of pieces thereof (11a,11b,11c,11d) each of which, when the rotatable member (1) is in the neutral circumferential position, is disposed adjacent a respective circumferential end of said gap (12) at which the magnetic flux density in said gap (12) changes in the circumferential direction but does not change substantially in the axial direction, so that when the rotatable member (1) is moved in the axial direction, there is substantially no magnetic restoring force acting on the pieces of magnetically permeable material (11a,11b,11c,11d).

2. Apparatus as claimed in claim 1 characterised in that the rotatable member (1) has diametrically oppositely disposed portions (1a) each of which is disposed in a respective gap (12), each said portion (1a) carrying two spaced apart pieces of magnetically permeable material (11a,11b,11c,11d) which, when the rotatable member (1) is in the neutral circumferential position, are respectively disposed adjacent opposite circumferential ends of the respective gap (12).

3. Apparatus as claimed in claim 1 or 2 characterised in that the two magnetically permeable members (5b,5b) comprise portions of magnetic yokes (5,8) which are in contact with a permanent magnet (6) disposed therebetween.

4. Apparatus as claimed in any preceding claim characterised in that the rotatable member (1) carries an objective lens (2) which is radially spaced from the shaft (7), the rotatable member (1) being provided with focusing means (3) for moving the rotatable member (1) axially so as to effect focusing of the objective lens (2), and the rotatable member (1) being provided with tracking means (4) for moving the rotatable member (1) circumferentially so as to effect tracking of the objective lens (2).

5. Apparatus as claimed in claim 4 characterised in that each of the focusing means (3) and the tracking means (4) is constituted by a coil.

## Revendications

1. Dispositif destiné à solliciter une pièce tournante (1) vers une position circonférentielle neutre, comprenant une pièce tournante (1) qui peut tourner autour d'un axe (7) et se déplacer axialement sur cet axe, la pièce tournante (1) comportant au moins une partie (la) qui est disposée à l'intérieur d'au moins un entrefer ayant la forme d'une partie d'anneau (12); entre deux pièces magnétiques ou à perméabilité magnétique élevée (5b, 6b), la pièce tournante (1) étant munie d'un matériau à perméabilité magnétique élevée (11a, 11b, 11c, 11d), pour solliciter la pièce tournante (1) vers la position circonférentielle neutre, grâce à quoi lorsque la pièce tournante est écartée de la position circonférentielle neutre, elle est sollicitée de façon à revenir vers cette dernière par la force de rappel magnétique agissant sur les éléments en matériau à perméabilité magnétique élevée (11a, 11b, 11c, 11d), caractérisé en ce que le matériau à perméabilité magnétique élevée comprend un certain nombre d'éléments (11a, 11b, 11c, 11d) qui, lorsque la pièce tournante (1) est dans la position circonférentielle neutre, sont respectivement disposés en position adjacente à une extrémité circonférentielle correspondante de l'entrefer (12) à laquelle l'induction magnétique dans l'entrefer (12) change dans la direction circonférentielle mais ne change pas notablement dans la direction axiale, de façon que lorsque la pièce tournante (1) est déplacée dans la direction axiale, il n'existe pratiquement aucune force de rappel magnétique agissant sur les éléments du matériau à perméabilité magnétique élevée (11a, 11b, 11c, 11d).

2. Dispositif selon la revendication 1, caractérisé en ce que la pièce tournante (1) comporte des parties diamétralement opposées (1a), chacune d'elles étant disposée dans un entrefer (12) respectif, chacune de ces parties (1a) portant deux éléments espacés du matériau à perméabilité magnétique élevée (11a, 11b, 11c, 11d) qui, lorsque la pièce tournante (1) est dans la position circonférentielle neutre, sont respectivement disposés dans des positions adjacentes aux extrémités circonférentielles opposées de l'entrefer (12) respectif.

3. Dispositif selon la revendication 1 ou 2, caractérisé en ce que les deux pièces à perméabilité magnétique élevée (5b, 8b) sont des parties de culasses magnétiques (5, 8) qui sont en contact avec un aimant permanent (6) disposé entre elles.

4. Dispositif selon l'une quelconque des revendications précédentes, caractérisé en ce que la pièce tournante (1) porte un objectif (2) qui est placé à distance de l'axe (7) en direction radiale, la pièce tournante (1) étant équipée de moyens de focalisation (3) qui sont destinés à déplacer la pièce tournante (1) en direction axiale pour effectuer la mise au point de l'objectif (2), et la pièce tournante (1) étant équipée de moyens d'alignement (4) qui sont destinés à déplacer la pièce tournante (1) en direction circonférentielle, Pour effectuer l'alignement de l'objectif (2).

5. Dispositif selon la revendication 4, caractérisé en ce que les moyens de focalisation (3) et les moyens d'alignement (4) sont constitués par des bobines respectives.

**Patentansprüche**

1. Vorrichtung zum Drücken eines diehbaren Elementes (1) in eine neutrale Umfangsstellung, bei der das drehbare Element (1) um eine Achse (7) drehbar und axial zu dieser bewegbar ist, wenigstens einen Teil (1a) aufweist, der in einem wenigstens teilweise ringförmigen magnetischen Spalt (12) zwischen zwei magnetischen oder magnetisch permeablen Elementen (5b, 8b) angeordnet ist und mit magnetisch permeablem Material (11a, 11b, 11c, 11d) versehen ist, um es gegen die neutrale Umfangsstellung zu drücken, wodurch das drehbare Element bei Bewegung aus der neutralen Umfangsstellung durch die magnetische Rückholkraft, welche auf die Stücke aus magnetisch permeablem Material (11a, 11b, 11c, 11d) wirkt, zu der neutralen Umfangsstellung hin zurückgedrückt wird, **dadurch gekennzeichnet,** daß das magnetisch permeable Material eine Anzahl von Stücken (11a, 11b, 11c, 11d) umfaßt, die hei in der neutralen Umfangsstellung befindlichem drehbaren Element (1) jeweils im Bereich eines entsprechenden Umfangsendes des Spaltes (12) angeordnet sind, an dem sich die magnetische Flußdichte im Spalt (12) in Umfangsrichtung im wesentlichen jedoch nicht in Achsrichtung ändert, so daß bei Bewegung des drehbaren Elementes (1) in Achsrichtung im wesentlichen keine magnetische Rückholkraft vorhanden ist, welche auf die Stücke aus magnetisch permeablem Material (11a, 11b, 11c, 11d) wirkt.

2. Vorrichtung nach Anspruch 1, **dadurch gekennzeichnet,** daß das drehbare Element (1) sich diametral gegenüberstehende Teile (1a) aufweist, welche jeweils in einem entsprechenden Spalt (12) angeordnet sind und Jeweils zwei beabstandete Stücke aus magnetisch permeablem Material (11a, 11b, 11c, 11d) tragen, welche bei in der neutralen Umfangsstellung befindlichem drehbaren Element (1) im Bereich von sich gegenüberstehenden Umfangsenden des entsprechenden Spaltes (12) angeordnet sind.

3. Vorrichtung nach Anspruch 1 oder 2, **dadurch gekennzeichnet,** daß die beiden magnetisch permeablen Elemente (5b, 8b) Teile von magnetischen Jochen (5, 8) umfassen, welche mit einem zwischen ihnen angeordneten Permanentmagneten (6) in Kontakt stehen.

4. Vorrichtung nach den vorhergehenden Ansprüchen, **dadurch gekennzeichnet,** daß das drehbare Element (1) eine Objektivlinse (2) trägt, welche von der Welle (7) radial beabstandet ist, daß das drehbare Element (1) mit einer Fokussierungseinrichtung (3) für eine derartige axiale Bewegung des rotierenden Elementes (1) vorsehen ist, daß die Objektivlinse (2) fokussiert ist, und daß das drehbare Element (1) mit einer Führungseinrichtung (4) versehen ist, um es derart in Umfangsrichtung zu bewegen, daß eine Führung der Objektivlinse (2) erfolgt.

5. Vorrichtung nach Anspruch 4, **dadurch gekennzeichnet,** daß die Fokussierungseinrichtung (3) und die Führungseinrichtung (4) als Spule ausgebildet sind.

# F I G. 1

# F I G. 2

# F I G. 3

MAGNETIC FLUX DENSITY

CIRCUMFERENTIAL DIRECTION

# F I G. 4

MAGNETIC FLUX DENSITY

AXIAL DIRECTION

# F I G. 5

TRACKING DIRECTION

COUNTERCLOCKWISE                    CLOCKWISE

# F I G. 6